# EUROPÄISCHE PATENTSCHRIFT

(11) **EP 0 943 482 B1**
(45) Veröffentlichungstag und Bekanntmachung des Hinweises auf die Patenterteilung: **26.01.2005**
(21) Anmeldenummer: 99104728.3
(22) Anmeldetag: 10.03.1999
(51) Int. Cl.: B60N 2/00, B60N 2/20, B60N 2/06, B60N 2/30

(54) **Anordnung von zumindest zwei nebeneinander angeordneten Sitzen einer Sitzreihe eines Kraftfahrzeuges**
Arrangement of at least two adjacent seats of a row of seats in an automotive vehicle
Agencement d'au moins deux sièges adjacents d'une rangée de sièges d'un véhicule automobile

(30) Priorität: 20.03.1998 DE 19812138
(43) Veröffentlichungstag der Anmeldung: 22.09.1999
(73) Patentinhaber: ADAM OPEL AG, 65423 Rüsselsheim (DE); Bertrand Faure Sitztechnik GmbH & Co. KG, D-31655 Stadthagen (DE); Dr.Ing. h.c. F. Porsche Aktiengesellschaft, 71287 Weissach (DE)
(72) Erfinder: Pache, Hans-Jürgen, 65468 Trebur (DE); Ehrhard, Winfried, Dipl.-Ing.(FH), 64839 Münster (DE); Hagemann, Rainer, Dipl.-Ing.(FH), 21398 Neetze (DE); Möllmann, Eduard, Dipl.-Ing.(FH), 89077 Ulm (DE); Adamski, Pawel, Dipl.-Ing., 71069 Sindelfingen (DE); Plate, Horst, Dipl.-Ing., 71735 Eberdingen (DE); Zarske, Rocco, Dipl.-Ing., 10437 Berlin (DE)
(74) Vertreter: Daniel, Ulrich W.P.

(56) Entgegenhaltungen:
- EP-A- 0 331 241
- EP-A- 0 670 241
- WO-A-99/03377
- DE-A- 3 436 509
- DE-A- 4 337 941
- US-A- 3 893 729

## Beschreibung

Die Erfindung betrifft eine Anordnung von zumindest zwei nebeneinander angeordneten Sitzen gemäß dem Oberbegriff des Patentanspruches 1.

Bei einer bekannten, für ein Kraftfahrzeug vorgesehenen Sitzanordnung dieser Art (DE 34 36 509 A1) ist zur Veränderung der Sitzplatzzahl vorgesehen, dass zwischen zwei beabstandet zueinander angeordneten Sitzen einer Sitzreihe ein mittlerer Sitz eingesetzt wird. Dieser Sitz weist ein entfernbares Sitzteil auf, das hochgestellt beispielsweise als Armlehne für die benachbarten Sitze und auf eine Höhe mit den benachbarten Sitzteilen tiefergestellt als Sitzfläche für eine weitere Person verwendbar ist. Wird das Sitzteil entfernt, so kann der freigewordene Raum zur Ablage von z. B. Gepäck genutzt werden.

Aus der Druckschrift EP 0 331 241 A2 ist eine gattungsfremde Sitzanordnung eines Traktors bekannt geworden. Der Traktorsitz ist in der Mitte in zwei Traktorsitzhälften geteilt. Zumindest eine Traktorsitzhälfte kann relativ zur anderen seitlich verschoben werden, so dass zwischen den beiden Sitzhälften ein freier Raum entsteht. In diesen freien Raum kann ein zusätzliches Sitzflächenelement wie auch ein zusätzliches Rückenlehnenelement eingesetzt werden. Damit kann der Traktorsitz, der normalerweise ausschließlich für den Traktorführer vorgesehen ist, derart verbreitert werden, dass wenigstens eine weitere Person auf dem Traktor mitfahren kann. Die zusätzliche separate Rückenlehne und das zusätzliche separate Sitzteil müssen extra verstaut werden, wenn der Traktorführer den in der normalen Stellung befindlichen Traktorsitz benutzend alleine den Traktor fährt.

Die DE 43 37 941 C2 offenbart eine gattungsfremde Fluggastsitzreihe. Bei dieser Fluggastsitzreihe können drei nebeneinander auf einer Sitzschiene geführte Flugzeuggastsitze derart zueinander seitlich verschoben werden, dass beim Zusammenrücken eine durchgängige Rückenlehne und eine durchgängige Sitzfläche entsteht. Die beiden mittleren Armlehnen, welche in der Ausgangsstellung der drei Sitze als Armlehne für die mittlere und die beiden benachbarten Personen dient, werden dabei zur Mitte hin zusammengerückt, so dass dazwischen ein restlicher, geringer Freiraum verbleibt, der dann nicht mehr genutzt werden kann. Durch die dann geschlossene Rückenlehne und die geschlossene Sitzfläche stehen anstatt vorher drei schmale Sitze nur noch zwei, breitere Sitze zur Verfügung.

Auch die US-Patentschrift Nr. 3,893,729 offenbart eine solche gattungsfremde Flugzeugsitzreihe. Dort können jedoch die beiden äußeren Sitze ähnlich der Traktorsitzanordnung der EP 0 331 241 relativ zu einander quer verschoben und der dazwischen entstehende freie Raum durch Einsetzen separater Sitzflächenteile und Rückenlehnenteile zu einer breiteren Sitzbank umgestaltet werden. Alternativ kann der dazwischen entstehende Freiraum zur Aufnahme von schmalen Sitzflächenelementen und eines zusätzlichen Armstützelementes genützt werden, so dass anstelle vorher zwei schmaler dann zwei breite Fluggastsitze mit einer mittleren breiten Armlehne verfügbar sind.

Schließlich offenbart die EP 0 670 241 B1 eine herkömmliche Kraftfahrzeug-Rücksitzbank für zwei Personen mit durchgängiger Sitzfläche und durchgängiger Rückenlehne, wobei zwischen den beiden Personen soviel Restfläche verbleibt, dass im Bedarfsfalle eine dritte Person Platz nehmen kann. Um den Komfort der beiden äußeren Sitzbereiche dieser Rücksitzbank zu erhöhen, kann aus dem mittleren Teil der Rückenlehne eine dort integrierte Armlehne herausgeklappt werden, so dass die beiden außen sitzenden Personen den mittleren Sitzflächenbereich der Rückenlehne der Rücksitzbank zum Abstützen ihrer Arme auf der herausgeklappten Armlehne nützen können.

Die aus der DE 34 36 509 A1 bekannte Sitzanordnung ist jedoch umständlich in der Handhabung, da zur Veränderung der Sitzplatzzahl bzw. zur Schaffung von Freiraum zwischen den äußeren Sitzen die einzelnen Teile des mittleren Sitzes entfernt werden müssen. Außerdem wird bei der Mitnahme des nur im Bedarfsfalle benötigten mittleren Sitzes der Laderaum zusätzlich eingeschränkt.

Der Erfindung liegt die Aufgabe zugrunde, bei einer Sitzanordnung der eingangs genannten Art den Sitz- bzw. Raumkomfort durch multifunktionelle Gestaltung der einzelnen Sitze bzw. deren Teile zu erhöhen, ohne daß dafür separate bzw. separierbare Teile benötigt werden.

Diese Aufgabe wird erfindungsgemäß dadurch gelöst, daß zumindest ein Sitz der Sitzanordnung quer zur Sitzrichtung **F** verstellbar ausgebildet ist, wobei der für diese Verstellung notwendige Freiraum durch Reduzierung der Breite des in der Nichtgebrauchslage befindlichen Sitzes oder zumindest von Teilen dieses Sitzes bereitgestellt wird, wobei hierfür das Sitzteil des in die Nichtgebrauchslage überführbaren Sitzes in eine tiefere, unterhalb des Sitzteils des quer zur Sitzrichtung **F** verstellbaren Sitzes befindliche Stellung verstellbar ausgebildet ist. Vorteilhafte Weiterbildungen der Erfindung sind Gegenstand der Unteransprüche.

Durch eine derartige Ausbildung der Sitzreihe kann der Sitz- bzw. Raumkomfort für die quer zur Sitzrichtung **F** verstellbaren Sitze wesentlich erhöht werden, da bei den zumindest teilweise in den Bereich des in der Nichtgebrauchslage befindlichen Sitzes verstellten Sitzen mehr Kopf- bzw. Schulterfreiheit für die in diesen Sitzen befindlichen Personen vorhanden ist. Der Sitzkomfort kann noch weiter durch multifunktionelle Gestaltung des in die Nichtgebrauchslage überführbaren Sitzes gesteigert werden, indem aus diesem Sitz ein Tisch oder eine Armlehne für die benachbarten Sitze gebildet wird, ohne daß dafür zusätzliche Teile erforderlich sind oder davon Teile entfernt werden müssen.

Einige Ausführungsbeispiele der Erfindung sind nachstehend anhand von Zeichnungen näher beschrieben. Es zeigen
- Fig. 1:: eine Sitzanordnung eines Kraftfahrzeuges mit drei nebeneinander angeordneten Sitzen in perspektivischer Ansicht, wobei aus dem in der Nichtgebrauchslage befindlichen mittleren Sitz eine Armlehne für die beiden äußeren Sitze gebildet ist;
- Fig. 2:: eine perspektivische Ansicht des mittleren Sitzes nach Fig. 1, ohne der die Einzelteile des Sitzes umhüllenden Polsterung, wobei aus der Rückenlehne dieses Sitzes ein Ablagetisch gebildet ist;
- Fig. 3:: eine Ansicht gemäß Fig. 2, jedoch mit einer in der Normalstellung befindlichen Rückenlehne;
- Fig. 4:: eine perspektivische Ansicht der Tragkonstruktion des Ablagetisches bzw. der Armlehne;
- Fig. 5:: eine Ansicht gemäß Pfeil X in Fig. 2, wobei die Tragelemente der Polsterteile sich in einer nach oben geschwenkten Armlehnen-Position befinden;
- Fig. 6:: eine alternative Ausbildung eines Sitzes mit einer in eine Armlehne umwandelbaren Rückenlehne;
- Fig. 7:: eine weitere alternative Ausbildung eines Sitzes, bei dem die Rückenlehne aus zwei in eine Armlehnen-Position schwenkbaren Polsterteilen besteht.

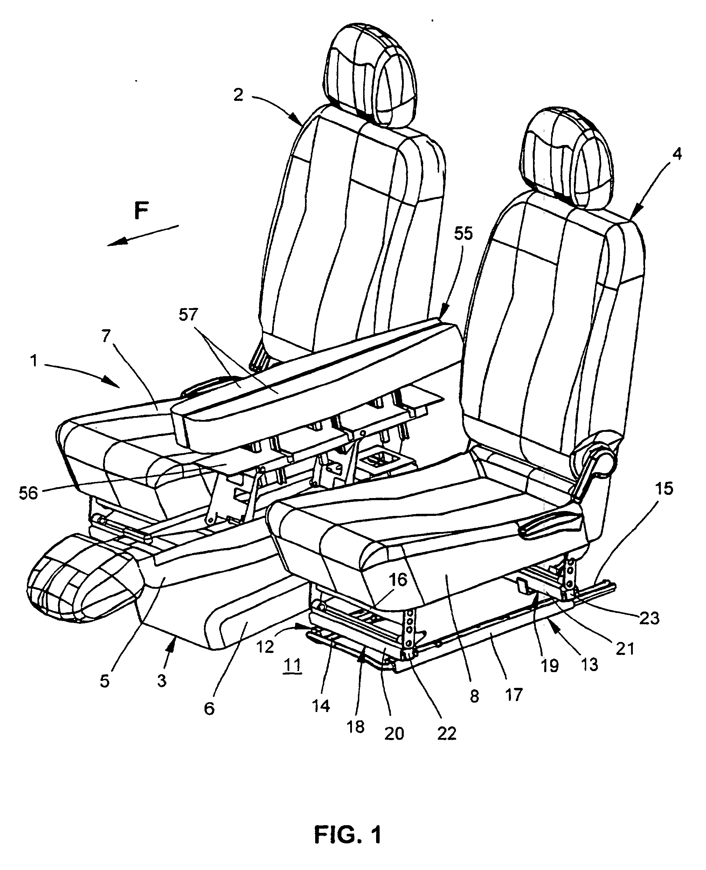

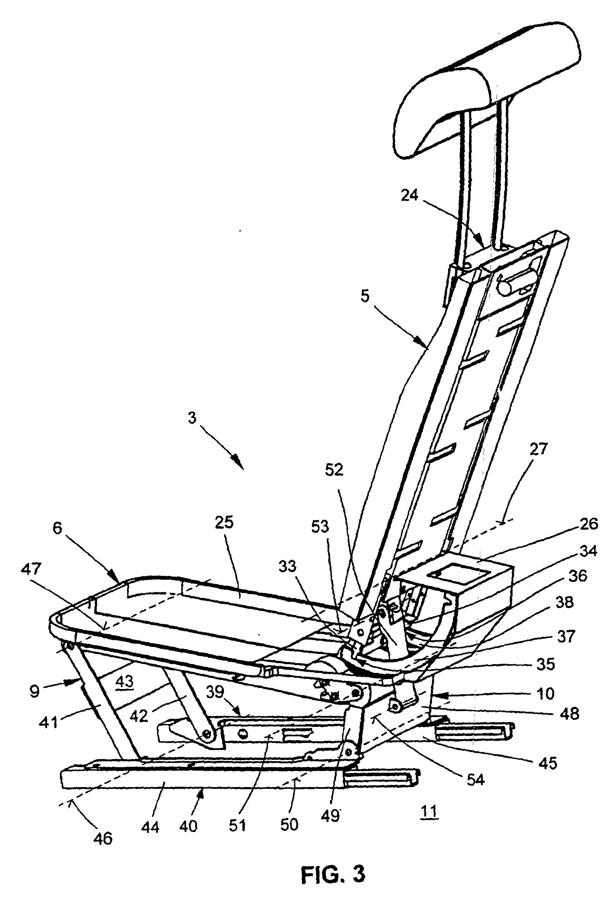

Fig. 1 zeigt eine Sitzreihe 1 eines nicht dargestellten Kraftfahrzeuges, welche drei nebeneinander angeordnete Sitze 2, 3, 4 aufweist, wobei der mittlere Sitz 3 in eine zwischen den beiden äußeren Sitzen 2, 4 befindliche Nichtgebrauchslage überführt ist. In dieser Nichtgebrauchslage befindet sich die Rückenlehne 5 des mittleren Sitzes 3 in einer etwa waagerechten Position, während sich das mit der Rückenlehne 5 scharnierartig verbundene Sitzteil 6 in einer abgesenkten Stellung unterhalb der Sitzteile 7, 8 der äußeren Sitze 2, 4 befindet. Für eine derartige Überführung des mittleren Sitzes 3 in die Nichtgebrauchslage ist das Sitzteil 6 im vorderen und im hinteren Bereichen über Schwenkstützen 9, 10 (in Fig. 3 dargestellt) mit dem Boden 11 verbunden, wobei die hintere Schwenkstütze 10 auf eine noch zu erläuternde Weise derart mit der Rückenlehne 5 verbunden ist, daß beim Vorklappen der Rückenlehne 5 gleichzeitig die Verstellung des Sitzteils 6 in die in Fig. 1 dargestellte Stellung erfolgt.

Die beiden äußeren Sitze 2, 4 sind sowohl längs- als auch querverschieblich mit dem Boden 11 verbunden. Dazu sind am jeweiligen äußeren Sitz 2, 4 im Bereich des Bodens 11 Schienenpaare 12, 13 vorgesehen, die in Sitzrichtung **F** orientiert sind und jeweils eine mit dem Boden 11 verbundene Unterschiene 14, 15 sowie eine auf der Unterschiene 14, 15 verschiebbar geführte Oberschiene 16, 17 aufweisen. Die Oberschienen 16, 17 können dabei mittels an sich bekannter Vorrichtungen in verschiedenen Stellungen verriegelt werden. Auf den Oberschienen 16, 17 sind zur Verstellung des Sitzes 2, 4 quer zur Sitzrichtung **F** weitere Schienenpaare 18, 19 angeordnet, welche quer zur Sitzrichtung **F** ausgerichtet sind und die jeweiligen Oberschienen 16, 17 der in Sitzrichtung **F** orientierten Schienenpaare 12, 13 am vorderen sowie am hinteren Ende miteinander verbinden. Die quer zur Sitzrichtung **F** orientierten Schienenpaare 18, 19 bestehen aus jeweils einer mit den Oberschienen 16, 17 verbundenen Führungsschiene 20, 21 und einer auf dieser verschiebbar gelagerten und mit dem Sitzteil 2, 4 verbundenen Sitzschiene 22, 23, welche analog der Oberschiene 16, 17 in verschiedenen Stellungen verriegelbar ausgebildet ist.

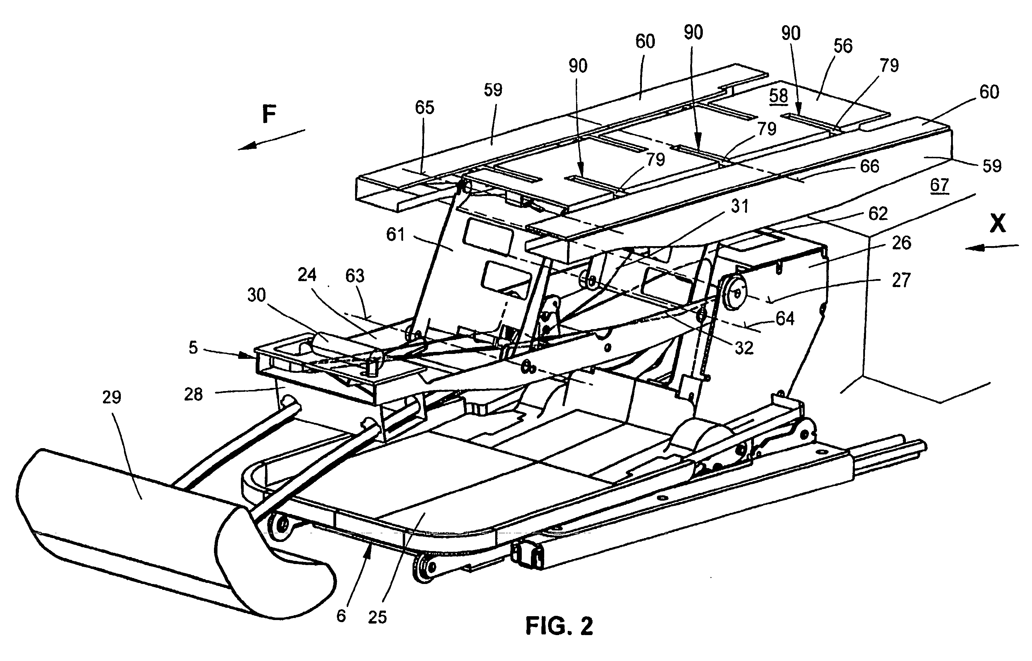

Die Einzelheiten des mittleren Sitzes 3 sind insbesondere aus Fig. 2 ersichtlich, in welcher der Rohbau dieses Sitzes 3 in einer solchen Stellung dargestellt ist, bei der sich eine Tragstruktur 24 der Rückenlehne 5 in einer etwa waagerechten Position und eine tragende Sitzschale 25 des Sitzteils 6 in einer nach unten abgesenkten Position befinden. Zum Überführen der Tragstruktur 24 aus der etwa vertikalen in die etwa waagerechte Position ist am hinteren Bereich der Sitzschale 25 eine sich nach oben erstreckende kastenförmige Halterung 26 vorgesehen, an der die Tragstruktur 24 um eine quer zur Sitzrichtung **F** orientierte Schwenkachse 27 angelenkt ist. Die Tragstruktur 24 ist dabei als ein profiliertes Blechteil mit örtlichen Versteifungen sowie Aufnahmen 28 für eine in der Höhe verstellbare Kopfstütze 29 ausgebildet. Im vorderen Bereich der Tragstruktur 24 ist ein Schieber 30 zur Entriegelung der Rückenlehne 5 in der jeweiligen Position vorgesehen. Dieser Schieber 30 ist durch Seilzüge 31, 32 kraftübertragend mit zwei - wie in Fig. 3 dargestellt - im unteren Bereich der Tragstruktur 24 beabstandet zueinander angeordneten und federnd gelagerten Raststiften 33, 34 verbunden. In der etwa vertikalen bzw. der etwa waagerechten Position der Rückenlehne 5 greifen die federbelasteten Raststifte 33, 34 selbsttätig in Ausnehmungen 35, 36 ein, die in jeweils einem kreisförmigen Segmentteil 37, 38 der kastenförmigen Halterung 26 angeordnet sind. Auf diese Weise kann die Rückenlehne 5 und somit auch der gesamte Sitz 3 in der jeweiligen Position sicher und komfortabel entriegelt bzw. verriegelt werden.

Aus Fig. 3 ist weiterhin ersichtlich, daß der Sitz 3 in Sitzrichtung **F** verstellbar mit dem Boden 11 verbunden ist. Diese Verstellung ist analog der Verstellung der äußeren Sitze 2, 4 ausgebildet, wobei die beabstandet zueinander angeordneten Schienenpaare 39, 40 über die vordere Schwenkstütze 9 und die hintere Schwenkstütze 10 mit der Sitzschale 25 verbunden sind. Die vordere Schwenkstütze 9 besteht dabei aus zwei parallel zueinander angeordneten Schwenkhebeln 41, 42, die in Querrichtung durch eine Verbindungsstrebe 43 miteinander verbunden sind. Diese Schwenkhebel 41, 42 sind am unteren Ende mit den Oberschienen 44, 45 um eine quer zur Sitzrichtung **F** angeordnete Achse 46 und am oberen Ende um eine parallel zu der am unteren Ende angeordneten Achse 46 verlaufende Achse 47 an der Sitzschale 25 angelenkt. Die hintere Schwenkstütze 10, welche im Vergleich zu der vorderen Schwenkstütze 9 einer höheren Belastung ausgesetzt ist, besteht im wesentlichen aus einem plattenförmigen Blechteil 48 mit rechtwinklig abgestellten Seiten 49 und ist am unteren Ende um eine quer zur Sitzrichtung **F** orientierte Achse 50 mit den Oberschienen 44, 45 und am oberen Ende um eine parallel zu der am unteren Ende angeordneten Achse 50 verlaufende Achse 51 mit der Sitzschale 25 verbunden. Durch eine derartige Anordnung der Schwenkstützen 9, 10 kann die Sitzschale 25 bzw. der komplette Sitz 3 bei der Überführung in die Nichtgebrauchslage in eine weiter vorn und unten befindliche Stellung geschwenkt werden.

Um die Überführung des Sitzes 3 in eine solche Nichtgebrauchslage zu vereinfachen ist die Rückenlehne 5 über ein schwenkbewegliches Koppelelement 52 derart mit dem Sitzteil 6 verbunden, daß beim Schwenken der Rückenlehne 5 um ihre Schwenkachse 27 eine zwangsweise Verstellung des Sitzteils 6 in die weiter vorn und unten befindliche Stellung bewirkt wird. Dazu ist das Koppelelement 52 mit seinem oberen Ende um eine parallel und beabstandet zu der Schwenkachse 27 der Rückenlehne 5 angeordnete Drehachse 53 am unteren Bereich der Tragstruktur 24 angelenkt. Das untere Ende des Koppelelementes 52 ist um eine parallel zu der am oberen Ende angeordneten Drehachse 53 verlaufende Drehachse 54 an der hinteren Schwenkstütze 10 in der Nähe der oberen Achse 51 angelenkt. Diese Drehachsen 53, 54 sind räumlich und kinematisch in bezug auf die Schwenkachse 27 der Rückenlehne 5, die obere Achse 51 und die untere Achse 50 der hinteren Schwenkstütze 10 so gewählt, daß bei der Verschwenkung der Rückenlehne 5 um die Schwenkachse 27 gleichzeitig - bedingt durch die Koppelverbindung (Koppelelement 52) - eine Verschwenkung der Schwenkstütze 10 in gleiche Richtung um die untere Achse 50 stattfindet. Dabei ist der Drehwinkel der Rückenlehne 5 zwischen der etwa vertikalen und der etwa waagerechten Position derart auf den entsprechenden Drehwinkel der hinteren Schwenkstütze 10 abgestimmt, daß nach der Überführung der Rückenlehne 5 in die etwa waagerechte Position sich das Sitzteil 6 - wie in Fig. 2 dargestellt - in der abgesenkten Position befindet.

Zwischen den beiden äußeren Sitzen 2, 4 der Sitzreihe 1 kann bei Bedarf, wie in Fig. 1 gezeigt, aus der Rückenlehne 5 des in der Nichtgebrauchslage befindlichen mittleren Sitzes 3 eine Armlehne 55 gebildet werden. Dazu ist an der Rückenlehne 5 eine parallel zu sich in eine höhere, sogenannte Tisch-Position verstellbare Tragplatte 56 vorgesehen, an der zwei spiegelbildlich ausgebildete Polsterteile 57 schwenkbar angelenkt sind. Nach dem Verschwenken der beiden Polsterteile 57 nach oben und Verriegelung in der in Fig. 1 gezeigten Armlehnen-Position wird die relativ große und bequeme Armlehne 55 gebildet, welche sich praktisch über die - in Sitzrichtung **F** gesehen - gesamte der Sitzreihe 1 erstreckt. Durch eine derartige Verschwenkung der Polsterteile 57 in die Armlehnen-Position wird - quer zur Sitzrichtung **F** gesehen - die Breite der Rückenlehne 5 reduziert, so daß die äußeren Sitze 2, 4 in den dadurch freigewordenen Raum im Bereich der Rückenlehne 5 zumindest teilweise verstellt werden können.

Der Aufbau und die Verbindung der Tragplatte 56 mit der Tragstruktur 24 der Rückenlehne 5 ist in Fig. 2 dargestellt. Dabei ist die etwa eine ebene Oberfläche 58 aufweisende Tragplatte 56 zusammen mit den daran angelenkten, etwa kastenförmigen Tragelementen 59 der Polsterteile 57 in die erhöhte Tisch-Position verlagert, in der die Oberseiten 60 der Tragelemente 59 und die Tragplatte 56 eine etwa waagerechte ebene Ablagefläche bilden. Für eine solche Verlagerung der Tragplatte 56 sind zwei etwa parallel und beabstandet zueinander angeordnete Schwingen 61, 62 vorgesehen, welche als plattenförmige Blechprägeteile ausgebildet sind. Diese Schwingen 61, 62 sind am jeweiligen unteren Ende über eine waagerecht und quer zur Sitzrichtung **F** gestellte Achse 63, 64 mit der Tragstruktur 24 der Rückenlehne 5 und am jeweiligen oberen Ende über eine parallel zu der am unteren Ende angeordneten Achse 63, 64 verlaufende Achse 65, 66 mit der Tragplatte 56 gelenkig verbunden. Bei der Rückverlagerung der Tragplatte 56 schwenken die Schwingen 61, 62 um die jeweiligen unteren Achsen 63, 64 und lenken somit die Tragplatte 56 in die an der Tragstruktur 24 vorgesehene, weiter vorn liegende Ruhestellung. In dieser Ruhestellung bildet die Tragplatte 56 zusammen mit den Tragelementen 59 auf der Rückseite der Rückenlehne 5 eine etwa waagerechte ebene Fläche, deren Höhe etwa der Höhe der hinter den Sitzen 2, 3, 4 befindlichen Laderaumfläche 67 entspricht.

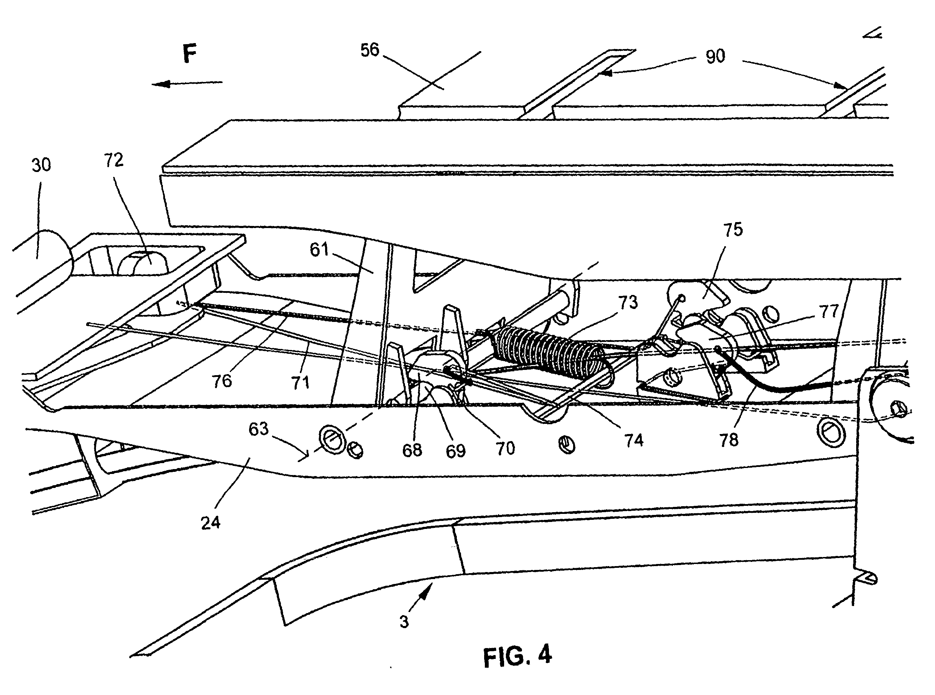

Die Tragplatte 56 ist sowohl in der Tisch-Position als auch in der Ruhestellung verriegelbar ausgebildet. Die Verriegelung in der Tisch-Position erfolgt - wie in Fig. 4 dargestellt - mittels einer an der Tragstruktur 24 drehbar gelagerten ersten Klinke 68, die in der dargestellten Position einen an der vorderen Schwinge 61 vorgesehenen Verriegelungsbolzen 69 übergreift. Der Verriegelungsbolzen 69 ist dabei in einem etwa rechten Winkel beabstandet zu der Achse 63 der vorderen Schwinge 61 angeordnet. Beim Schwenken der vorderen Schwinge 61 im Uhrzeigersinn bewegt sich somit auch der Verriegelungsbolzen 69 kreisförmig um die Achse 63 bis zur selbsttätigen Verriegelung durch die erste Klinke 68, welche in die kreisförmige Bahn des Verriegelungsbolzens 69 hineinragt und durch eine Schenkelfeder 70 nachgiebig in der Verriegelungsstellung gehalten ist. Zum Entriegeln des Verriegelungsbolzens 69 ist die erste Klinke 68 über einen ersten Seilzug 71 mit einer Schiebetaste 72 verbunden, die in der Nähe des Schiebers 30 zur Entriegelung der Rückenlehne 5 angeordnet ist. Bei Betätigung der Schiebetaste 72 wird die erste Klinke 68 aus der Verriegelungsstellung weggeschwenkt, so daß die Tragplatte 56 gegen die Kraft einer zwischen der Tragplatte 56 und der Tragstruktur 24 wirkenden Feder 73 zurück in die Ruhestellung überführt werden kann. Die einerseits an der vorderen Schwinge 61 und andererseits an einer Querstrebe 74 der Tragstruktur 24 angreifende Feder 73 ist dabei zur Unterstützung der Verstellung der Tragplatte 56 in die Tisch-Position vorgesehen.

Die Verriegelung der Tragplatte 56 in der Ruhestellung erfolgt auf ähnliche Weise wie die Verriegelung in der Tisch-Position. Bei der Überführung der Tragplatte 56 in die Ruhestellung verriegelt selbsttätig eine zweite, ebenfalls an der Tragstruktur 24 drehbar gelagerte und in Verriegelungsstellung federbelastete Klinke 75 einen an der Tragplatte 56 angeordneten zweiten Verriegelungsbolzen, welcher in der in Fig. 4 gezeigten Stellung der Tragplatte 56 nicht sichtbar ist. Zum Entriegeln dieses zweiten Verriegelungsbolzens ist die zweite Klinke 75 über einen zweiten Seilzug 76 mit der Schiebetaste 72 verbunden, welche somit die Tragplatte 56 sowohl in der Tisch-Position als auch in der Ruhestellung entriegeln kann.

Um eine unbeabsichtigte Entriegelung der Tragplatte 56 in der etwa vertikalen Position der Rückenlehne 5 zu verhindern, wird die Tragplatte 56 bzw. der zweite Verriegelungsbolzen von einer dritten Klinke 77 in der Ruhestellung gesichert. Die Verriegelung mittels der dritten Klinke 77 ist ähnlich der Verriegelung der Tragplatte 56 in der Ruhestellung ausgebildet, wobei ein die dritte Klinke 77 entriegelnde Seilzug 78 derart in die Sitzkinematik bei der Überführung des Sitzes 3 in die Nichtgebrauchslage eingebunden ist, daß erst in der etwa waagerechten Position der Rückenlehne 5 die dritte Klinke 77 den zweiten Verriegelungsbolzen freigibt. Eine solche Anordnung des dritten Seilzuges 78 ist in der Zeichnung nicht dargestellt, da diese für einen Fachmann geläufig ist.

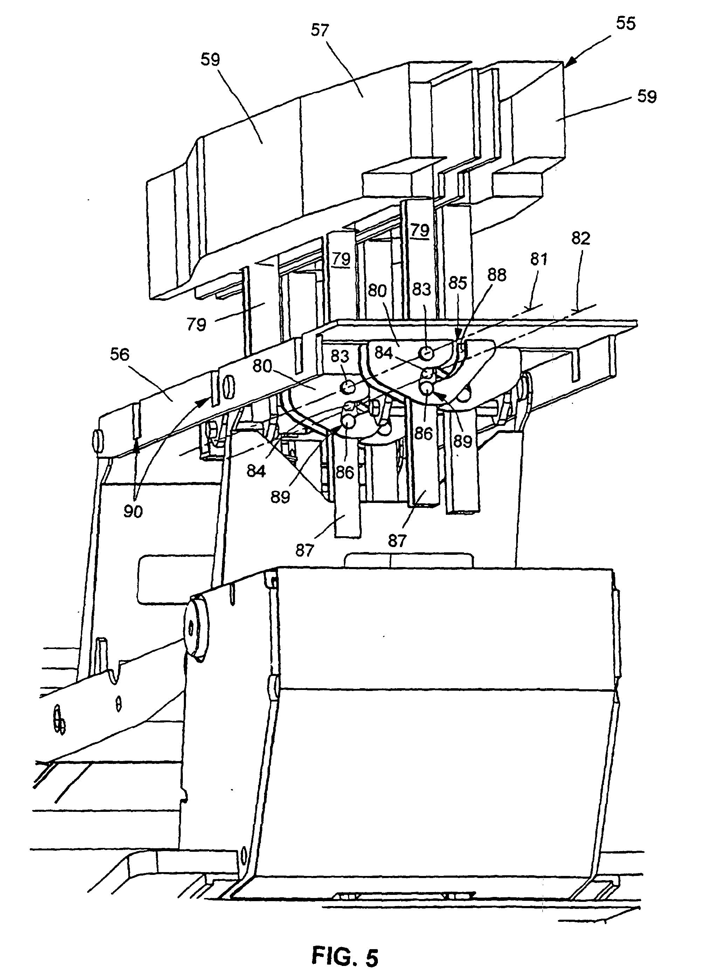

Zur Bildung der Armlehne 55 zwischen den beiden äußeren Sitzen 2, 4 müssen die Polsterteile 57 in die in Fig. 1 gezeigten Armlehnen-Position geschwenkt und in dieser Position verriegelt werden. In Fig. 5 ist ein solcher Aufbau der Armlehne 55 zur Verdeutlichung ohne der dazugehörigen Polsterung dargestellt. Wie daraus ersichtlich, sind die jeweiligen Tragelemente 59 der Armlehne 55 von drei Hebelarmen 79 gestützt, welche jeweils in einem an der Tragplatte 56 angeordneten Lagerbock 80 sowohl schwenkbar als auch geringfügig axial verschiebbar gelagert sind. Die Schwenkung der Tragelemente 59 erfolgt dabei um jeweils eine an der Tragplatte 56 angeordnete Achse 81, 82, die durch etwa parallel zur Sitzrichtung **F** ausgerichtete und fest mit dem jeweiligen Lagerbock 80 verbundene Lagerbolzen 83 gebildet ist. Die Lagerbolzen 83 durchsetzen jeweils ein an den Hebelarmen 79 vorgesehenes Langloch 84, das in Längsrichtung des Hebelarmes 79 ausgerichtet ist. An den Lagerböcken 80 sind weiterhin Kulissenführungen 85 für jeweils einen fest mit dem jeweiligen Hebelarm 79 verbundenen Führungsstift 86 vorgesehen, um eine selbsttätige Fixierung der Tragelemente 59 in der Armlehnen-Position zu erreichen.

Nachfolgend wird die Überführung der Tragelemente 59 der Polsterteile 57 in die Armlehnen-Position näher erläutert. In der Ausgangssituation befinden sich die Tragelemente 59 in der in Fig. 2 dargestellten Tisch-Position, in der die Hebelarme 79 etwa waagerecht ausgerichtet sind. In dieser Lage liegt der jeweilige vom Tragelement 59 abgewandte Abschnitt 87 (in Fig. 5 zu sehen) des Hebelarms 79 an der Unterseite der Tragplatte 56 an und fixiert somit die Tragelemente 59 in dieser Position. Zum Überführen der Tragelemente 59 in die Armlehnen-Position müssen diese um die jeweilige Achse 81, 82 nach oben geschwenkt werden. An der Tragplatte 56 sind dazu für jeden Hebelarm 79 querverlaufende Schlitze 90 ausgebildet, welche eine solche Verschwenkung der Hebelarme 79 und somit auch der Tragelemente 59 zwischen der Tisch-Position und der Armlehnen-Position ermöglichen. Während dieser Schwenkbewegung gleiten die Führungsstifte 86 derart entlang der kreisförmigen Abschnitte 88 der Kulissenführungen 85, daß gleichzeitig eine axiale Verschiebung der Hebelarme 79 entsprechend der axialen Ausdehnung der Langlöcher 84 erfolgt. Beim Erreichen der Armlehnen-Position rasten die Führungsstifte 86 in jeweils einer am Ende der Kulissenführungen 85 angeordnete Rastausnehmung 89 ein, die eine Rückverlagerung der Tragelemente 59 nach unten und dadurch eine Fixierung der jeweiligen Tragelemente 59 in der Armlehnen-Position ermöglicht.

Die in der Armlehnen-Position befindlichen Tragelemente 59 sind sehr einfach in die Tisch-Position zu überführen. Dazu müssen die Tragelemente 59 lediglich geringfügig angehoben werden, damit die Führungsstifte 86 der Hebelarme 79 außer Eingriff mit den entsprechenden Rastausnehmungen 89 kommen. Danach können die so entriegelte Tragelemente 59 bequem in die etwa waagerechte Tisch-Position geschwenkt werden.

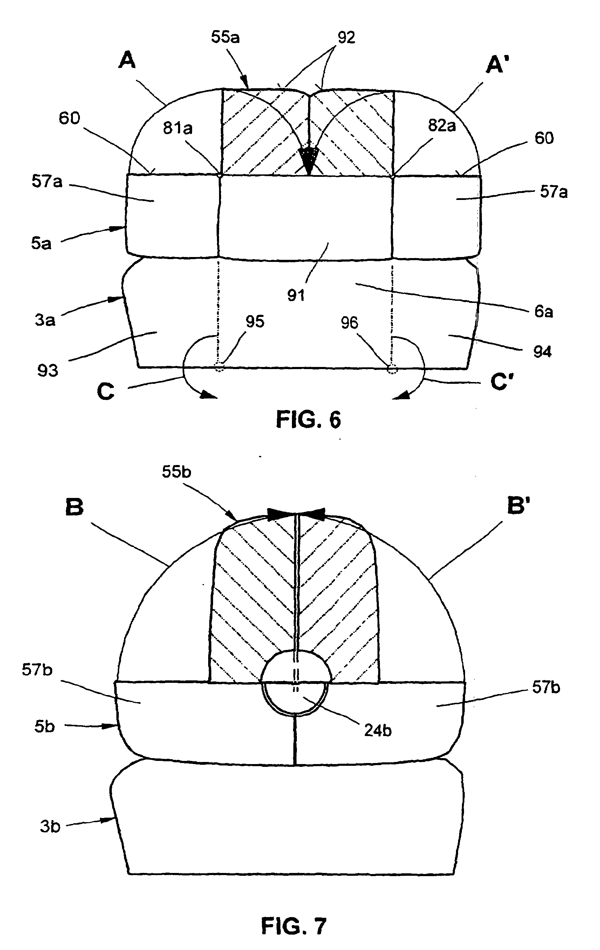

Die Erfindung läßt zahlreiche Ausführungsformen zu. So kann bei einer alternativen Ausbildung eines Sitzes 3a, wie in Fig. 6 dargestellt, die Rückenlehne 5a relativ einfach in eine Armlehne 55a umgewandelt werden. Dazu muß die Rückenlehne 5a zunächst gegen das Sitzteil 6a vorgeklappt werden. In dieser Position bildet sie mit ihrer ebenen Rückfläche eine etwa waagerechte Ablagefläche. Wie aus der Fig. 6 ersichtlich, besteht die Rückenlehne 5a aus einem tragenden Mittelteil 91, an dem zwei spiegelbildlich an dessen beiden Seiten angeordnete Polsterteile 57a um jeweils eine Achse 81a, 82a schwenkbar angelenkt sind. Diese Polsterteile 57a können durch Schwenken um etwa 180° gemäß dem jeweiligen Pfeil **A**, **A'** in die in Fig. 6 schraffiert dargestellte Armlehnen-Position überführt werden. In dieser Armlehnen-Position bilden die Polsterteile 57a mit ihren gepolsterten oberen Seiten 92 die Abstützfläche der Armlehne 55a. Bei dieser Ausführung werden die gepolsterten Seiten 92 der Polsterteile 57a sowohl zur Bildung der Abstützfläche der Armlehne 55a als auch zur Bildung der Abstützfläche der Rückenlehne 5a für die auf diesem Sitz 3a sitzende Person genutzt.

Bei einer weiteren alternativen Ausführung eines Sitzes 3b ist dessen Rückenlehne 5b - wie in Fig. 7 gezeigt - durch zwei spiegelbildlich zueinander angeordnete Polsterteile 57b gebildet, welche auf eine nicht näher dargestellte Weise an einer segmentförmigen Tragstruktur 24b schwenkbar gelagert sind. Diese Polsterteile 57b können durch Schwenken um etwa 90° gemäß dem jeweiligen Pfeil B, B' in die in Fig. 7 schraffiert dargestellte Armlehnen-Position überführt werden, wodurch eine komfortable Armlehne 55b gebildet wird. Diese Ausführung des Sitzes 5b ist ebenfalls einfach in der Handhabung und kann - wie auch die zuvor beschriebene Ausführung des Sitzes 3a - anstelle der mit Fig. 1 bis Fig. 5 beschriebenen Ausführung des Sitzes 3 in der Sitzreihe 1 verwendet werden.

Bei den Ausführungen nach Fig. 6 und Fig. 7 können auch die Sitzteile 6a, 6b analog der Ausbildung der Rückenlehnen 5a, 5b mehrteilig ausgebildet sein. Wie in Fig. 6 angedeutet, können die so gebildeten Seitenteile 93, 94 schwenkbar um jeweils eine Achse 95, 96 am Sitzteil 6a angelenkt sein. Durch Verschwenkung dieser Seitenteile 93, 94 gemäß dem jeweiligen Pfeil **C, C'** reduziert sich somit die Breite dieses Sitzteils 6a. Auf diese Weise kann sowohl bei der Rückenlehne 5a als auch beim Sitzteil 6a in der Nichtgebrauchslage des Sitzes 3a die Breite reduziert werden, wodurch Freiraum zur Verstellung der äußeren Sitze 2, 4 quer zur Sitzrichtung **F** geschaffen wird.

## Patentansprüche

1. Anordnung von zumindest zwei nebeneinander angeordneten Sitzen einer Sitzreihe eines Kraftfahrzeuges, welche zum Reduzieren der Sitzplätze zumindest einen aus einer normalen, zum Aufnehmen einer Person geeigneten Gebrauchslage in eine Nichtgebrauchslage überführbaren Sitz aufweist, **dadurch gekennzeichnet, dass** zumindest ein Sitz (2, 4) der Sitzanordnung quer zur Sitzrichtung **F** verstellbar ausgebildet ist, wobei der für diese Verstellung notwendige Freiraum durch Reduzierung der Breite des in der Nichtgebrauchslage befindlichen Sitzes (3; 3a; 3b) oder zumindest von Teilen dieses Sitzes (3; 3a; 3b) bereitgestellt wird, wobei hierfür das Sitzteil (6; 6a) des in die Nichtgebrauchslage überführbaren Sitzes (3; 3a; 3b) in eine tiefere, unterhalb des Sitzteils (7, 8) des quer zur Sitzrichtung F verstellbaren Sitzes (2, 4) befindliche Stellung verstellbar ausgebildet ist.

2. Sitzanordnung nach Anspruch 1, **dadurch gekennzeichnet, dass** zum Bereitstellen des Freiraumes für den quer zur Sitzrichtung **F** verstellbaren Sitz (2, 4) zumindest an der Rückenlehne (5; 5a; 5b) des in die Nichtgebrauchslage überführten Sitzes (3; 3a; 3b) zumindest ein in der Höhe verstellbares und/oder schwenkbares Polsterteil (57; 57a; 57b) vorgesehen ist.

3. Sitzanordnung nach Anspruch 1 oder 2, **dadurch gekennzeichnet, dass** sich die Rückenlehne (5; 5a; 5b) in der Nichtgebrauchslage in einer etwa waagerechten Stellung befindet und dass das Polsterteil (57; 57a; 57b) um eine etwa waagerechte, in Sitzrichtung **F** orientierte Achse (81, 82; 81a, 82a) an der Rückenlehne (5; 5a; 5b) oder Teilen davon angelenkt ist.

4. Sitzanordnung nach einem der Ansprüche 1 bis 3, **dadurch gekennzeichnet, dass** bei etwa waagerechter Position der Rückenlehne (5; 5a; 5b) durch Verschwenkung des Polsterteils (57; 57a; 57b) um die in Sitzrichtung **F** orientierte Achse (81, 82; 81a, 82a) die Breite der Rückenlehne (5; 5a; 5b) reduziert wird.

5. Sitzanordnung nach einem der Ansprüche 2 bis 4, **dadurch gekennzeichnet, dass** das Polsterteil (57; 57a; 57b) zur Bildung einer Armlehne (55; 55a; 55b) für den benachbarten Sitz (2, 4) ausgebildet und durch Verschwenkung um die in Sitzrichtung **F** orientierte Achse (81, 82; 81a, 82a) in eine Armlehnen-Position überführbar ist.

6. Sitzanordnung nach Anspruch 5, **dadurch gekennzeichnet, dass** das Polsterteil (57; 57a; 57b) in der Armlehnen-Position verriegelbar ausgebildet ist.

7. Sitzanordnung nach einem der Ansprüche 2 bis 6, **dadurch gekennzeichnet, dass** das Polsterteil (57; 57a; 57b) aus der Armlehnen-Position in eine Tisch-Position überführbar ist, in der zumindest eine relativ stabile ebene Fläche (60) des Polsterteils (57; 57a; 57b) zusammen mit der Rückfläche der Rückenlehne (5; 5a; 5b) eine etwa waagerechte Ablagefläche bildet.

8. Sitzanordnung nach einem der Ansprüche 2 bis 7, **dadurch gekennzeichnet, dass** die Rückenlehne (5; 5a; 5b) zwei spiegelbildlich angeordnete Polsterteile aufweist, welche durch Verschwenkung um die jeweilige, in Sitzrichtung **F** orientierte Achse (81, 82; 81a, 82a) aus einer die Ablagefläche bildenden Tisch-Position in die Armlehnen-Position überführbar sind.

9. Sitzanordnung nach einem der Ansprüche 1 bis 8, **dadurch gekennzeichnet, dass** die Rückenlehne (5; 5a; 5b) scharnierartig mit dem dazugehörigen Sitzteil (6; 6a) verbunden ist und dass die in etwa waagerechter Position befindliche Rückenlehne (5; 5a; 5b) ein mit dem Sitzteil (6; 6a) gemeinsames Sitzpaket bildet, welches derart in der Höhe verstellbar ausgebildet ist, dass die rückwärtige ebene Fläche der Rückenlehne (5; 5a; 5b) in einer untersten Stellung des Sitzpaketes etwa in einer Ebene mit dem hinter dem Sitz (3; 3a; 3b) befindlichen Ladeboden (67) liegt.

10. Sitzanordnung nach einem der Ansprüche 2 bis 9, **dadurch gekennzeichnet, dass** die Rückfläche der Rückenlehne (5) zumindest teilweise durch eine Tragplatte (56) gebildet ist, an der zumindest ein Polsterteil (57) um die in Sitzrichtung **F** orientierte Achse (81, 82) schwenkbar angelenkt ist.

11. Sitzanordnung nach Anspruch 10, **dadurch gekennzeichnet, dass** die Tragplatte (56) verstellbar mit der Rückenlehne (5) verbunden ist, derart, dass in der etwa waagerechten Position der Rückenlehne (5) durch Verstellung der Tragplatte (56) in eine etwa parallel ausgerichtete höhere Stellung die Tisch-Position der Polsterteile (57) gebildet ist.

12. Sitzanordnung nach Anspruch 10 oder 11, **dadurch gekennzeichnet, dass** die Tragplatte (56) sowohl in ihrer an der Rückenlehne (5) befindlichen Ruhestellung als auch in der nach oben verstellten Tisch-Position zwangsverriegelt ist.

13. Sitzanordnung nach einem der Ansprüche 10 bis 12, **dadurch gekennzeichnet, dass** die Rückenlehne (5) eine mit dem dazugehörigen Sitzteil (6) scharnierartig verbundene Tragstruktur (24) aufweist und dass die Tragplatte (56) durch zumindest eine mit der Tragstruktur (24) schwenkbar verbundene Schwinge (61, 62) in die Tisch-Position verlagerbar ist.

14. Sitzanordnung nach Anspruch 13, **dadurch gekennzeichnet, dass** die Tragstruktur (24) eine vordere Schwinge (61) sowie eine hintere Schwinge (62) aufweist, die etwa parallel und beabstandet zueinander angeordnet und am jeweiligen unteren Ende über eine waagerecht und quer zur Sitzrichtung **F** gestellte Achse (63, 64) mit der Tragstruktur (24) der Rückenlehne (5) und am jeweiligen oberen Ende über eine parallel zu der am unteren Ende angeordneten Achse (63, 64) verlaufende Achse (65, 66) mit der Tragplatte (56) gelenkig verbunden sind.

15. Sitzanordnung nach einem der Ansprüche 10 bis 14, **dadurch gekennzeichnet, dass** das Polsterteil (57) ein formstabiles Tragelement (59) sowie zumindest einen mit diesem verbundenen Hebelarm (79) aufweist, wobei der Hebelarm (79) in einem Lagerbock (80) der Tragplatte (56) zwischen der Tisch-Position und der Armlehnen-Position schwenkbar und in der jeweiligen Position fixierbar ausgebildet ist.

16. Sitzanordnung nach einem der Ansprüche 1 bis 8, **dadurch gekennzeichnet, dass** zum Bereitstellen des Freiraumes für den quer zur Sitzrichtung **F** verstellbaren Sitz (2, 4) am Sitzteil (6a) des in die Nichtgebrauchslage überführten Sitzes (3a) zumindest ein um eine in Sitzrichtung **F** ausgerichtete Achse (95, 96) schwenkbares Seitenteil (93, 94) vorgesehen ist.

## Claims

1. Arrangement of at least two adjacent seats of a seat row of a motor vehicle, which, to reduce the sitting places, has at least one seat which can be transferred out of a normal working position suitable for holding a person into a non-working position, **characterised in that** at least one seat (2, 4) of the seat arrangement is designed to be displaceable transversely to the seat direction F, wherein the free space necessary for this displacement is provided by reducing the width of the seat (3; 3a; 3b) which is in the non-working position, or at least of portions of this seat (3; 3a; 3b), wherein for this purpose the seat portion (6; 6a) of the seat (3; 3a; 3b) which can be transferred into the non-working position is designed to be displaceable into a lower position located below the seat portion (7, 8) of the seat (2, 4) which is displaceable transversely to the seat direction F.

2. Seat arrangement according to claim 1, **characterised in that**, for providing the free space for the seat (2, 4) which is displaceable transversely to the seat direction F, at least one height-adjustable and/or pivotable upholstery portion (57; 57a; 57b) is provided at least on the back (5; 5a; 5b) of the seat (3; 3a; 3b) transferred into the non-working position.

3. Seat arrangement according to claim 1 or 2, **characterised in that** the seat back (5; 5a; 5b) in the non-working position is in an approximately horizontal position and **in that** the upholstery portion (57; 57a; 57b) is linked to the seat back (5; 5a; 5b) or portions thereof about an approximately horizontal axis (81, 82; 81a, 82a) oriented in the seat direction F.

4. Seat arrangement according to any of claims 1 to 3, **characterised in that**, in the approximately horizontal position of the seat back (5; 5a; 5b), by pivoting the upholstery portion (57; 57a; 57b) about the axis (81, 82; 81a, 82a) oriented in the seat direction F the width of the seat back (5; 5a; 5b) is reduced.

5. Seat arrangement according to any of claims 2 to 4, **characterised in that** the upholstery portion (57; 57a; 57b) is designed to form an armrest (55; 55a; 55b) for the adjacent seat (2, 4) and can be transferred into an armrest position by pivoting about the axis (81, 82; 81a, 82a) oriented in the seat direction F.

6. Seat arrangement according to claim 5, **characterised in that** the upholstery portion (57; 57a; 57b) is designed so that it can be locked in the armrest position.

7. Seat arrangement according to any of claims 2 to 6, **characterised in that** the upholstery portion (57; 57a; 57b) can be transferred out of the armrest position into a table position in which at least one relatively stable flat surface (60) of the upholstery portion (57; 57a; 57b) together with the rear surface of the seat back (5; 5a; 5b) forms an approximately horizontal depositing surface.

8. Seat arrangement according to any of claims 2 to 7, **characterised in that** the seat back (5; 5a; 5b) has two inversely symmetrically arranged upholstery portions which can be transferred out of a table position forming the depositing surface into the armrest position by pivoting about the respective axis (81, 82; 81a, 82a) oriented in the seat direction F.

9. Seat arrangement according to any of claims 1 to 8, **characterised in that** the seat back (5; 5a; 5b) is hinged to the associated seat portion (6; 6a) and **in that** the seat back (5; 5a; 5b) located in the approximately horizontal position forms a seat assembly together with the seat portion (6; 6a), which is designed to be adjustable in height in such a way that the rear flat surface of the seat back (5; 5a; 5b) in a lowermost position of the seat assembly lies approximately in the same plane as the loading floor (67) located behind the seat (3; 3a; 3b).

10. Seat arrangement according to any of claims 2 to 9, **characterised in that** the rear surface of the seat back (5) is at least partially formed by a supporting plate (56) to which at least one upholstery portion (57) is linked so as to be pivotable about the axis (81, 82) oriented in the seat direction F.

11. Seat arrangement according to claim 10, **characterised in that** the supporting plate (56) is adjustably connected to the seat back (5) in such a way that, in the approximately horizontal position of the seat back (5), the table position of the upholstery portions (57) is formed by displacing the supporting plate (56) into an approximately parallel-oriented higher position.

12. Seat arrangement according to claim 10 or 11, **characterised in that** the supporting plate (56) is positively locked both in its rest position located on the seat back (5) and in the upwardly displaced table position.

13. Seat arrangement according to any of claims 10 to 12, **characterised in that** the seat back (5) has a supporting structure (24) hinged to the associated seat portion (6) and **in that** the supporting plate (56) is displaceable into the table position by at least one link (61, 62) pivotably connected to the supporting structure (24).

14. Seat arrangement according to claim 13, **characterised in that** the supporting structure (24) has a front link (61) and a rear link (62) which are arranged approximately parallel and spaced apart from each other, and are pivotably connected at the respective lower end to the supporting structure (24) of the seat back (5) via an axis (63, 64) set horizontally and transversely to the seat direction F, and at the respective upper end to the supporting plate (56) via an axis (65, 66) running parallel to the axis (63, 64) arranged at the lower end.

15. Seat arrangement according to any of claims 10 to 14, **characterised in that** the upholstery portion (57) has a dimensionally stable supporting element (59) and at least one lever arm (79) connected thereto, wherein the lever arm (79) is designed so that it can be pivoted in a bearing block (80) of the supporting plate (56) between the table position and the armrest position and fixed in the respective position.

16. Seat arrangement according to any of claims 1 to 8, **characterised in that**, for providing the free space for the seat (2, 4) which is displaceable transversely to the seat direction F, at least one side portion (93, 94) pivotable about an axis (95, 96) oriented in the seat direction F is provided on the seat portion (6a) of the seat (3a) transferred into the non-working position.

## Revendications

1. Agencement d'au moins deux sièges adjacents d'une rangée de sièges d'un véhicule automobile, qui, pour diminuer le nombre de places assises, présente au moins un siège pouvant passer d'une position d'utilisation normale, appropriée pour recevoir une personne, à une position de non-utilisation, **caractérisé en ce qu'**au moins un siège (2, 4) de l'agencement de sièges est formé de façon déplaçable transversalement par rapport à la direction des sièges F, la marge de manoeuvre nécessaire pour ce déplacement étant fournie par la réduction de la largeur du siège qui se trouve en position de non-utilisation (3 ; 3a ; 3b) ou du moins de parties de ce siège (3 ; 3a ; 3b), la partie de siège (6 ; 6a) du siège (3 ; 3a ; 3b) pouvant passer dans la position de non-utilisation étant à cet effet formée déplaçable, dans une position plus basse, sous la partie de siège (7, 8) du siège (2, 4) déplaçable transversalement par rapport à la direction des sièges F.

2. Agencement de sièges selon la revendication 1, **caractérisé en ce que**, pour fournir la marge de manoeuvre pour le siège (2, 4) déplaçable transversalement par rapport à la direction des sièges F, au moins au niveau du dossier (5 ; 5a ; 5b) du siège (3 ; 3a ; 3b) pouvant passer dans la position de non-utilisation, on prévoit au moins une partie de rembourrage (57 ; 57a ; 57b) déplaçable en hauteur et/ou pivotante.

3. Agencement de sièges selon la revendication 1 ou 2, **caractérisé en ce que** le dossier (5 ; 5a ; 5b) se trouve en position de non-utilisation dans une position sensiblement horizontale, et **en ce que** la partie de rembourrage (57 ; 57a ; 57b) est articulée autour d'un axe (81, 82 ; 81a, 82a) sensiblement horizontal, orienté dans la direction des sièges F au niveau du dossier (5 ; 5a ; 5b) ou de parties de ce dernier.

4. Agencement de sièges selon l'une des revendications 1 à 3, **caractérisé en ce que** la largeur du dossier (5 ; 5a ; 5b) est réduite quand le dossier (5 ; 5a ; 5b) est en position sensiblement horizontale, par le pivotement de la partie de rembourrage (57 ; 57a; 57b) autour de l'axe (81, 82 ; 81a, 82a) orienté dans la direction des sièges F.

5. Agencement de sièges selon l'une des revendications 2 à 4, **caractérisé en ce que** la partie de rembourrage (57 ; 57a ; 57b) est formée pour la formation d'un accoudoir (55 ; 55a ; 55b) pour le siège (2, 4) voisin, et peut passer dans une position d'accoudoir par pivotement autour d'un axe (81, 82 ; 81a, 82a) orienté dans la direction des sièges F.

6. Agencement de sièges selon la revendication 5, **caractérisé en ce que** la partie de rembourrage (57 ; 57a ; 57b) est formée de façon verrouillable en position d'accoudoir.

7. Agencement de sièges selon l'une des revendications 2 à 6, **caractérisé en ce que** la partie de rembourrage (57 ; 57a ; 57b) peut passer d'une position d'accoudoir à une position de table, dans laquelle au moins une surface plane relativement stable (60) de la partie de rembourrage (57 ; 57a ; 57b) forme, ensemble avec la surface arrière du dossier (5 ; 5a ; 5b) une surface de réception sensiblement horizontale.

8. Agencement de sièges selon l'une des revendications 2 à 7, **caractérisé en ce que** le dossier (5 ; 5a ; 5b) présente deux parties de rembourrage disposées en regard, lesquelles peuvent passer d'une position de table formant une surface de réception à une position d'accoudoir, par pivotement autour de l'axe correspondant (81, 82, 81a, 82a) orienté dans la direction des sièges F.

9. Agencement de sièges selon l'une des revendications 1 à 8, **caractérisé en ce que** le dossier (5 ; 5a ; 5b) est relié par une charnière à la partie de siège correspondante (6 ; 6a), et **en ce que** le dossier (5 ; 5a ; 5b), se trouvant dans une position sensiblement horizontale, forme un ensemble de sièges commun avec la partie de siège (6 ; 6a), lequel est formé de façon déplaçable en hauteur, de telle façon que la surface plane du dossier (5 ; 5a ; 5b) située à l'arrière est dans la position la plus basse de l'ensemble de sièges, sensiblement dans un plan avec un plancher de chargement (67) situé derrière le siège (3; 3a; 3b).

10. Agencement de sièges selon l'une des revendications 2 à 9, **caractérisé en ce que** la surface arrière du dossier (5) est formée au moins en partie par une plaque de support (56), sur laquelle au moins une partie de rembourrage (57) est articulée de façon pivotante autour d'un axe (81, 82) orienté dans la direction des sièges F.

11. Agencement de sièges selon la revendication 10, **caractérisé en ce que** la plaque de support (56) est reliée au dossier (5) de façon déplaçable, de telle façon que la position de table des parties de rembourrage (57) est formée dans une position du dossier (5) sensiblement horizontale, par le déplacement de la plaque de support (56) dans une position plus élevée alignée sensiblement parallèlement.

12. Agencement de sièges selon la revendication 10 ou 11, **caractérisé en ce que** la plaque de support (56) est verrouillable de manière forcée aussi bien dans sa position de repos qui se trouve au niveau du dossier (5) que dans la position de table déplaçable vers le haut.

13. Agencement de sièges selon l'une des revendications 10 à 12, **caractérisé en ce que** le dossier (5) présente une structure de support (24) reliée par une charnière à la partie de siège correspondante (6), et **en ce que** la plaque de support (56) est déplaçable en position de table par au moins un balancier (61, 62) relié de façon pivotante à la structure de support (24).

14. Agencement de sièges selon la revendication 13, **caractérisé en ce que** la structure de support (24) présente un balancier avant (61) ainsi qu'un balancier arrière (62), qui sont disposés sensiblement parallèlement et à distance l'un de l'autre, et sont reliés de façon articulée, à l'extrémité inférieure correspondante, à la structure de support (24) du dossier (5), au moyen d'un axe (63, 64) positionné horizontalement et transversalement par rapport à la direction des sièges F, et à l'extrémité supérieure correspondante, à la plaque de support (56), au moyen d'un axe (65, 66) s'étendant parallèlement à l'axe (63, 64) disposé à l'extrémité inférieure.

15. Agencement de sièges selon l'une des revendications 10 et 14, **caractérisé en ce que** la partie de rembourrage (57) présente un élément de support indéformable (59) ainsi qu'au moins un bras de levier (79) relié à celui-ci, le bras de levier (79) étant formé dans un support de palier (80) de la plaque de support (56), pivotant entre la position de table et la position d'accoudoir, et blocable dans la position correspondante.

16. Agencement selon l'une des revendications 1 à 8, **caractérisé en ce que**, pour fournir la marge de manoeuvre pour le siège déplaçable (2, 4) transversalement par rapport à la direction des sièges F, au niveau de la partie de siège (6a) du siège (3a) pouvant passer dans la position de non-utilisation, au moins une partie latérale (93, 94) est prévue pivotante autour d'un axe (95, 96) aligné dans la direction des sièges F.
